# EUROPEAN PATENT SPECIFICATION

(11) **EP 2 833 022 B1**
(45) Date of publication and mention of the grant of the patent: **20.07.2016**
(21) Application number: 14178489.2
(22) Date of filing: 25.07.2014
(51) Int. Cl.: F16H 25/22

(54) **Ball screw device**
Kugelgewindevorrichtung
Dispositif de vis sphérique

(30) Priority: 29.07.2013 JP 2013157012
(43) Date of publication of application: 04.02.2015
(73) Proprietor: JTEKT Corporation, Osaka-shi Osaka 542-8502 (JP)
(72) Inventor: Koyagi, Katsura, Osaka-shi, Osaka, 542-8502 (JP); Tashiro, Akiyoshi, Osaka-shi, Osaka, 542-8502 (JP); Sakaguchi, Naoko, Osaka-shi, Osaka, 542-8502 (JP)
(74) Representative: Winter, Brandl, Fürniss, Hübner, Röss, Kaiser, Polte - Partnerschaft mbB

(56) References cited:
- EP-A1- 2 778 476
- FR-A- 1 436 798
- GB-A- 559 407
- JP-A- 2007 132 493

## Description

### BACKGROUND OF THE INVENTION

### 1. Field of the Invention

The invention relates to a ball screw device.

### 2. Description of Related Art

A ball screw device described in Japanese Patent Application Publication No. 2010-71411 (JP 2010-71411 A) has a circulation path. The circulation path provides communication between one end portion and the other end portion of a ball rolling path to allow balls to circulate along a raceway. The circulation path has a through-hole, a feed-side communication passage, and a discharge-side communication passage. The through-hole is formed so as to pass through a peripheral wall of a ball nut in its axial direction. The feed-side communication passage provides communication between one end of the through-hole and the one end portion of the ball rolling path. The discharge-side communication passage provides communication between the other end of the through-hole and the other end portion of the ball rolling path. The feed-side communication passage is formed in a feed-side deflector member attached to the peripheral wall of the ball nut. The discharge-side communication passage is formed in a discharge-side deflector member attached to the peripheral wall of the ball nut.

The through-hole described in JP 2010-71411 A is formed through, for example, drilling. To facilitate the drilling, the through-hole needs to extend along the axial direction of the ball nut. However, if the through-hole is limited to the one that extends along the axial direction, the positions in the circumferential direction, where the paired deflectors (the feed-side deflector member and the discharge-side deflector member) are arranged, are limited. Therefore, in the ball screw device configured as described above, the adoptable number of turns is automatically limited to numbers of turns having a predetermined decimal fraction such as 7, that is, limited to, for example, 1.7 turns and 2.7 turns. Specifically, even if the theoretically required effective number of the turns of the ball screw device is theoretically, for example, 2.3, it is necessary to employ the ball screw device of which the effective number of the turns is 2.7. Therefore, there is a possibility that the ball screw device becomes larger in the axial direction.

If the positions in the circumferential direction, where deflectors are arranged, are not limited, the theoretically effective number of the turns of a ball screw device can be employed as it is. Consequently, it is possible to reduce the size of the ball screw device in the axial direction.

Documents GB 559 407 A, which discloses a ball screw device according to the preamble of claim 1, FR 1 436 798 A and the postpublished document EP 2 778 476 A1 disclose further embodiments of a ball screw device, respectively.

### SUMMARY OF THE INVENTION

One object of the invention is to provide a ball screw device that makes it possible to increase the flexibility of the layout of the positions where deflectors are arranged, while allowing balls to be smoothly circulated in a ball rolling path.

A ball screw device according to the invention includes: a threaded shaft having an outer peripheral face in which a groove is formed; a ball nut fitted onto the threaded shaft and having an inner peripheral face in which a groove is formed; a plurality of balls rollably disposed in a spiral ball rolling path formed by the groove of the ball nut and the groove of the threaded shaft; and a cylinder disposed so as to surround an outer periphery of the ball nut. In the groove of the ball nut, accommodation recesses that pass through a peripheral wall of the ball nut in a thickness direction of the ball nut are formed in two accommodation recess formed positions that are apart from each other in an axial direction of the threaded shaft. In at least one of an outer peripheral face of the ball nut and an inner peripheral face of the cylinder, a turning groove that turns in a spiral manner along the outer peripheral face of the ball nut and the inner peripheral face of the cylinder is formed, and the turning groove and the outer peripheral face of the ball nut or the inner peripheral face of the cylinder constitute a turning rolling path in which the balls are rollable. The ball screw device further comprises deflectors accommodated in the respective accommodation recesses, and each having a connection passage that connects the ball rolling path and the turning rolling path to each other. The two connection passages and the turning rolling path constitute a returning path through which the balls are returned from one of the two accommodation recess formed positions to the other one of the two accommodation recess formed positions. The ball nut has an internally-fitting portion having an outer peripheral face formed such that a distance between the outer peripheral face and a central axis of the ball nut is non-uniform along a circumferential direction of the ball nut, the internally-fitting portion being a part of the ball nut in an axial direction of the ball nut. Relative rotation between the ball nut and the cylinder is prevented by fitting an outer periphery of the internally-fitting portion and an inner periphery of the cylinder. There is provided an axial movement prevention structure that prevents an axial movement of the cylinder relative to the ball nut.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic sectional view of an electric brake system to which a ball screw device according to an embodiment of the invention is applied, illustrating a non-braking state;
FIG. 2 is a schematic sectional view of the electric braking system in FIG. 1, illustrating a braking state;
FIG. 3 is an exploded perspective view of the ball screw device according to the embodiment of the invention;
FIG. 4 is a schematic vertical sectional view of the ball screw device according to the embodiment of the invention;
FIG. 5 is a sectional view taken along the line A-A in FIG. 4;
FIG. 6 is a sectional view taken along the line B-B in FIG. 4;
FIG. 7A is a perspective view of a deflector illustrated in FIG. 3 (first);
FIG. 7B is a perspective view of the deflector illustrated in FIG. 3 (second);
FIG. 8 is a sectional view taken along the line C-C in FIG. 4;
FIG. 9 is a sectional view taken along the line D-D in FIG. 4;
FIG. 10 is a sectional view for describing connection between the inner periphery of a cylindrical portion and the outer periphery of an internally-fitting portion according to a first modified example of the embodiment of the invention;
FIG. 11 is a sectional view for describing connection between the inner periphery of a cylindrical portion and the outer periphery of an internally-fitting portion according to a second modified example of the embodiment of the invention;
FIG. 12 is a view for describing arrangement of accommodation holes and deflectors according to a third modified example of the embodiment of the invention; and
FIG. 13 is a main portion sectional view illustrating the configuration of a deflector according to a fourth modified example of the embodiment of the invention.

### DETAILED DESCRIPTION OF EMBODIMENTS

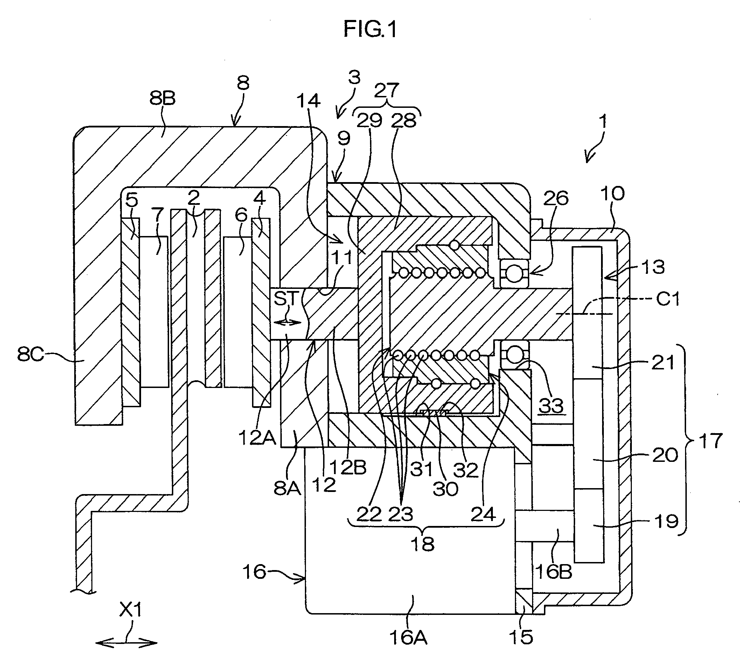

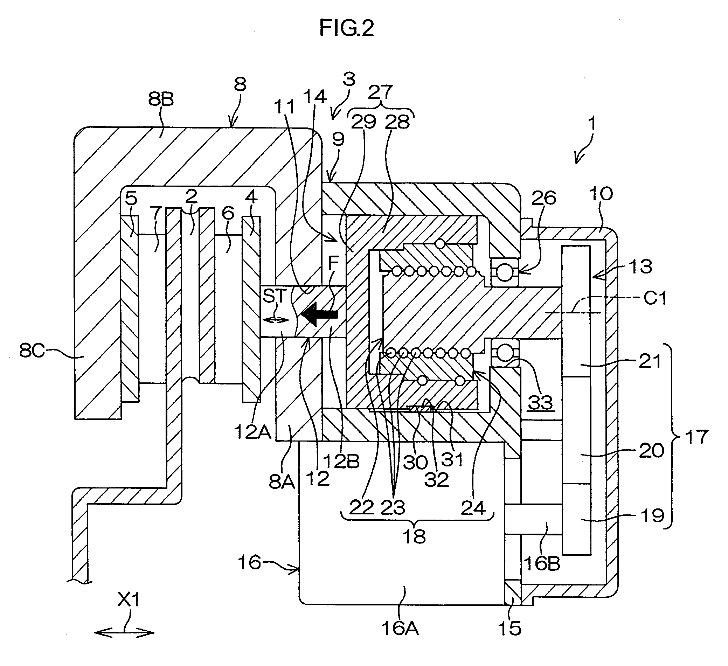

Hereinafter, an embodiment of the invention will be described with reference to the accompanying drawings. FIG. 1 is a schematic sectional view illustrating a non-braking state of an electric brake system 1 to which a ball screw device 18 according to an embodiment of the invention is applied. FIG. 2 is a schematic sectional view illustrating a braking state of the electric brake system 1. As illustrated in FIG. 1 and FIG. 2, the electric brake system 1 is configured to apply braking force due to friction to a disc 2 that is rotated together with a wheel of, for example, a vehicle.

The electric brake system 1 includes a caliper 3 of a floating type, a first backup plate 4 and a second backup plate 5, and a first pad 6 and a second pad 7. The caliper 3 is movably supported by, for example, a knuckle (not illustrated). The first backup plate 4 and the second backup plate 5 are disposed on the opposite sides of the disc 2, and supported by the caliper 3 so as to be allowed to approach or move away from each other. The first pad 6 and the second pad 7 are fixed respectively to the first backup plate 4 and the second backup plate 5, and are able to press corresponding side faces of the disc 2 as illustrated in FIG. 2.

The caliper 3 includes a first body 8, a second body 9 and a cover 10. The first body 8 and the second body 9 are secured to each other. The cover 10 is secured to the second body 9. The first body 8 has a body portion 8A and an arm 8C. The arm 8C is connected to the body portion 8A via a bridge 8B. The first backup plate 4 is secured to one end 12A of a support shaft 12. One end 12A of the support shaft 12 is supported in a support hole 11 that extends through the body portion 8A so as to be movable in the axial direction (thrust direction ST). A piston 27 is fixedly attached to the other end 12B of the support shaft 12. The second backup plate 5 is secured to the arm 8C. The second body 9 is secured to the body portion 8A. The second body 9 has a generally cylindrical shape, and is made of, for example, an aluminum material.

The caliper 3 presses both the pads 6, 7 against the disc 2 to fulfil the function of producing braking force. Specifically, the caliper 3 includes an electric actuator 13 and a transmission mechanism 14. The electric actuator 13 produces a thrust force F in the thrust direction ST that is parallel to a wheel axis direction X1 (refer to FIG. 2). The transmission mechanism 14 transmits the thrust force F produced by the electric actuator 13 to the pads 6, 7. The electric actuator 13 includes an electric motor 16, a gear mechanism 17 and the ball screw device 18. The electric motor 16 includes a motor housing 16A secured to an attachment stay 15 that extends from the second body 9, and a rotary shaft 16B that serves as an output shaft. The gear mechanism 17 reduces the speed of rotation output from the electric motor 16 and transmits the rotation with a reduced speed. The ball screw device 18 is a motion conversion mechanism that converts the rotary motion that is transmitted via the gear mechanism 17 into a linear motion in the thrust direction ST.

The gear mechanism 17 includes a drive gear 19, an idle gear 20 and a driven gear 21. The drive gear 19 is fitted to an end portion of the rotary shaft 16B so as to be rotatable together with the rotary shaft 16B. The idle gear 20 is meshed with the drive gear 19. The driven gear 21 is meshed with the idle gear 20, and rotates about a central axis C1. The idle gear 20 is rotatably supported by the second body 9. The driven gear 21 is secured to a threaded shaft 22 (described later) so as to be coaxial with the threaded shaft 22. The gear mechanism 17 is covered with the cover 10 that is secured to the second body 9.

The ball screw device 18 includes the threaded shaft 22 and a ball nut 24. The threaded shaft 22 is an input member. The ball nut 24 is an output member that is screwed to the threaded shaft 22 via balls 23. Specifically, the threaded shaft 22 is rotatably supported by a rolling bearing 26 secured to the inner periphery of the second body 9, which defines a support hole 33. Thus, the threaded shaft 22 is disposed so as to be rotatable but to be restrained from moving in its axial direction (thrust direction ST).

The ball nut 24 is disposed in a piston 27 having a bottomed cylinder shape so as to be movable with respect to the piston 27 in the axial direction (axial direction X1 (described later), thrust direction ST) of the piston 27 but non-rotatable. The piston 27 has a cylindrical portion 28 and a bottom portion 29. The cylindrical portion 28 surrounds the outer periphery of the threaded shaft 22. The bottom portion 29 is secured to the other end 12B of the support shaft 12. Further, a key groove 30 is formed in an axially and circumferentially intermediate portion of the cylindrical portion 28.

The piston 27 is accommodated in the second body 9 with a small space left between the outer periphery of the cylindrical portion 28 and the inner periphery of the second body 9. A key groove 31 is formed in the inner periphery of the second body 9 so as to extend in the axial direction. A key 32 fitted in both the key grooves 30, 31 allows the piston 27 to move in the axial direction (axial direction X1 (described later)) relative to the second body 9, but restrains the piston 27 from rotating relative to the second body 9. Thus, it is possible prevent rotation of the piston 27 while allowing the piston 27 to move in the axial direction X1.

The rotation of the rotary shaft 16B of the electric motor 16 is transmitted via the gear mechanism 17, and thus the threaded shaft 22 is rotated about its axis. In association with the rotation of the threaded shaft 22, the ball nut 24 moves in the axial direction (thrust direction ST). At the time of braking by the electric brake system 1, the thrust force F produced by the electric actuator 13 is transmitted toward the first pad 6 via the transmission mechanism 14. As illustrated in FIG. 2, the first pad 6 is pressed against the disc 2 to apply, to the disc 2, braking force caused by frictional force in a direction (for example, a direction that is orthogonal to the sheet on which FIG. 2 is drawn and directed toward the back side of the sheet) opposite to the rotational direction (for example, a direction that is orthogonal to the sheet on which FIG. 2 is drawn and directed toward the front side of the sheet) of the disc 2.

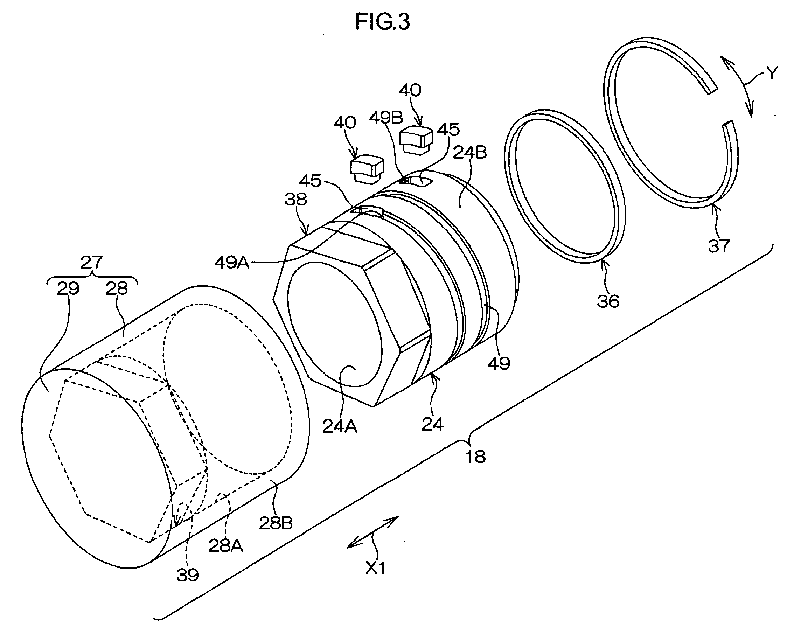

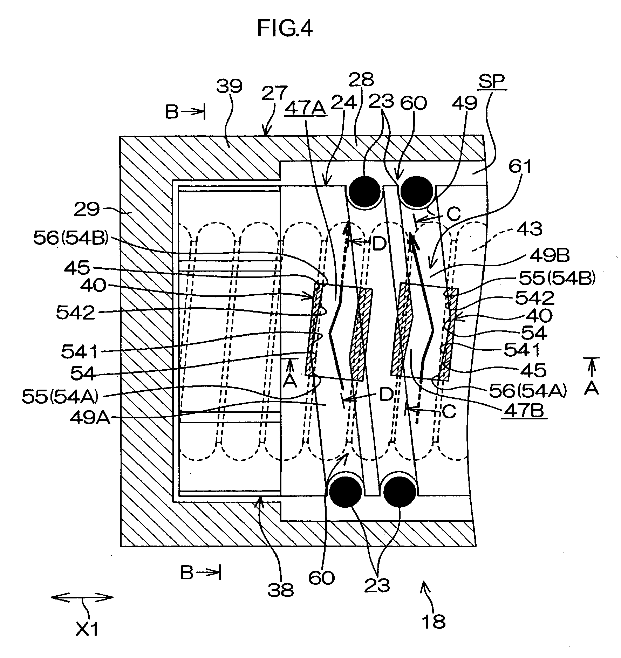

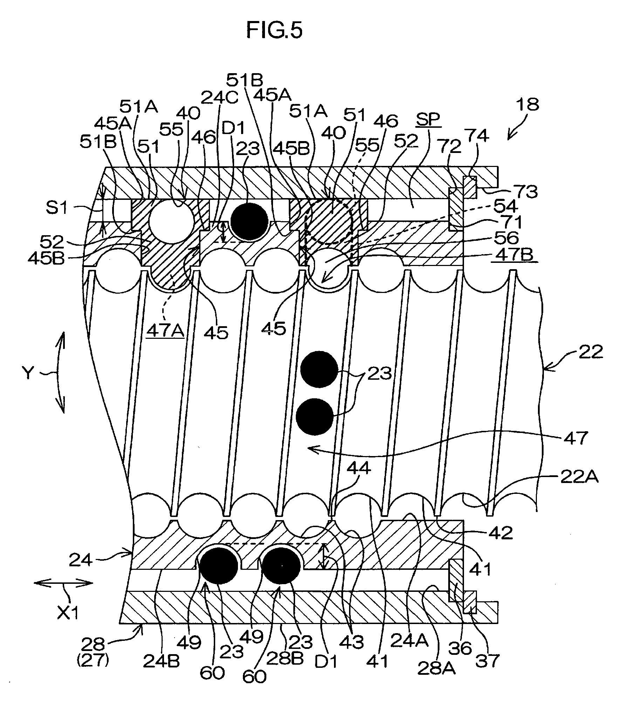

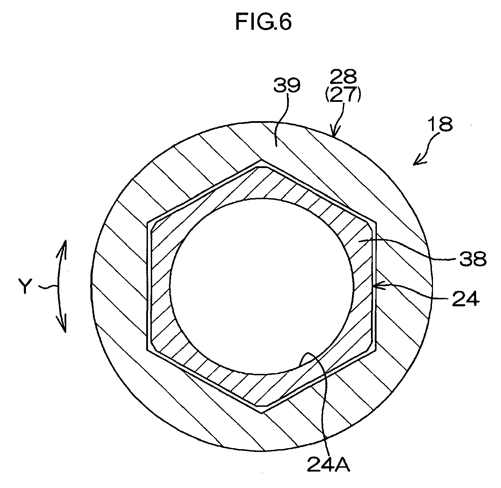

FIG. 3 is an exploded perspective view of the ball screw device 18. FIG. 4 is a schematic vertical sectional view of the ball screw device 18. FIG. 5 is a sectional view taken along the line A-A in FIG. 4. FIG. 6 is a sectional view taken along the line B-B in FIG. 4. FIG. 3 illustrates the ball screw device 18 from which the threaded shaft 22 is removed. The configuration of the ball screw device 18 will be described with reference to FIG. 3 to FIG. 6. In the ball screw device 18, the theoretically required effective number of turns is 2.7, and the theoretically effective number of the turns, that is, 2.7 is employed as it is. The ball screw device 18 includes the threaded shaft 22, the ball nut 24, a plurality of the balls 23, the piston 27 that surrounds the outer periphery of the ball nut 24, a pair of deflectors 40, a bushing 36 and a snap ring 37. The threaded shaft 22 extends in the axial direction X1. The ball nut 24 is fitted onto the threaded shaft 22. The balls 23 are interposed between the threaded shaft 22 and the ball nut 24. The bushing 36 is held between the outer periphery of the ball nut 24 and the inner periphery of the cylindrical portion 28. The snap ring 37 abuts against the bushing 36 to prevent movement of the ball nut 24 in the axial direction X1 relative to the piston 27. The axial directions of the threaded shaft 22, the ball nut 24 and the cylindrical portion 28 are all coincident with the wheel axis direction X1 and the thrust direction ST. In the following description, the axial directions of the threaded shaft 22, the ball nut 24 and the cylindrical portion 28 will be referred to as the axial direction X1.

As illustrated in FIG. 5, grooves 41 are formed in an outer peripheral face 22A of the threaded shaft 22. The left side of FIG. 5 corresponds to one side in the axial direction X1. The grooves 41 are spiral grooves gradually shifted toward the other side (the right side of FIG. 5) in the axial direction X1 while turning around the central axis of the threaded shaft 22. Each groove 41 has a generally U-shaped curved face in section. In the outer peripheral face 22A, spiral ridges 42 are formed so as to constitute boundaries between the grooves 41 adjacent to each other in the axial direction X1.

As illustrated in FIG. 3 to FIG. 6, the ball nut 24 is made of metal such as steel. The ball nut 24 is a tubular member extending in the axial direction X1. An internally-fitting portion 38 to be fitted to the inner periphery of the cylindrical portion 28 of the piston 27 is formed at one end portion (a lower left end portion in FIG. 3 and a left end portion in FIG. 4) of the ball nut 24. An outer peripheral face 24B of the ball nut 24 except the internally-fitting portion 38 is a cylindrical face. Especially, as illustrated in FIG. 6, the internally-fitting portion 38 has a regular hexagonal columnar outside shape, and the outer periphery of the internally-fitting portion 38 is coaxial with the outer peripheral face 24B. In other words, the distance between the outer periphery of the internally-fitting portion 38 and the central axis of the outer peripheral face 24B is not uniform in a circumferential direction Y. The six apexes of the outer periphery of the internally-fitting portion 38 are located on an extension surface of the outer peripheral face 24B of the ball nut 24 except the internally-fitting portion 38. The internally-fitting portion 38 is formed by forging. Thus, the ball nut 24 and the piston 27 are prevented from rotating relative to each other. That is, it is possible to prevent relative rotation between the ball nut 24 and the piston 27 without increasing the number of components.

The inner peripheral face of the internally-fitting portion 38 and the inner peripheral face of the ball nut 24 are cylindrical faces that are flush with each other. These two inner peripheral faces define an inner peripheral face 24A. The inner peripheral face 24A is coaxial with the outer peripheral face 24B. As illustrated in FIG. 4 and FIG. 5, in the inner peripheral face 24A of the ball nut 24, grooves 43 are formed. The grooves 43 are spiral grooves gradually shifted toward the other side (the right side of FIG. 4 and FIG. 5) in the axial direction X1 while turning around the central axis of the inner peripheral face 24A. Each groove 43 has a generally U-shaped curved face in section. In the inner peripheral face 24A, spiral ridges 44 are formed so as to constitute boundaries between the grooves 43 adjacent to each other in the axial direction X1.

As illustrated in FIG. 5, in a region where the inner peripheral face 24A of the ball nut 24 is present in the axial direction X1, ball rolling paths 47 are formed by the grooves 43 of the ball nut 24 and the grooves 41 present in a portion of the outer peripheral face 22A of the threaded shaft 22, which faces the inner peripheral face 24A. That is, the spiral ball rolling paths 47 are formed by the grooves 41 of the ball nut 24 and the grooves 43 of the threaded shaft 22. As illustrated in FIG. 5, each ball rolling path 47 has a generally circular section. The ball rolling paths 47 have a spiral form, and gradually shifted toward the other side (the right side of FIG. 5) in the axial direction X1 while turning around the central axis of the ball nut 24 and the threaded shaft 22. Between the ball rolling paths 47 adjacent to each other in the axial direction X1, the ridge 42 of the threaded shaft 22 and the ridge 44 of the ball nut 24 are located so as to face each other in the radial direction. The ridge 42 and the ridge 44 form a boundary between the two ball rolling paths 47 adjacent to each other in the axial direction X1.

As illustrated in FIG 3 to FIG. 5, two accommodation holes (accommodation recesses) 45 are formed in the inner peripheral face 24A of the ball nut 24. The two accommodation holes 45 open at a rolling start position (accommodation recess formed position) 47A (refer to FIG. 5) and a rolling end position (accommodation recess formed position) 47B (refer to FIG. 5) that are apart from each other in the axial direction X1, in the inner peripheral face 24A. The accommodation holes 45 extend radially outward from the inner peripheral face 24A, and pass through a peripheral wall of the ball nut 24 in the radial direction.

As illustrated in FIG. 5, the two accommodation holes 45 are arranged at an interval (corresponding to three grooves 43 in the present embodiment) in the axial direction X1 so as to be parallel to each other. Each accommodation hole 45 has an outer region 45A and an inner region 45B. The outer region 45A is located close to the outer peripheral face 24B of the ball nut 24. The inner region 45B is located closer to the inner peripheral face 24A than the outer region 45A. As viewed from outside the ball nut 24 (outside the ball nut 24 in the radial direction), each accommodation hole 45 (both the outer region 45A and the inner region 45B) is elongated along a direction that is tilted with respect to a circumferential direction Y by an angle corresponding to the tilt angle of each groove 43.

In a portion of the ball nut 24, which defines each accommodation hole 45, a step portion 46 that constitutes the boundary between the outer region 45A and the inner region 45B is formed. In the outer peripheral face 24B of the ball nut 24, an outer periphery turning groove (turning groove) 49 is formed. The outer periphery turning groove 49 is a spiral groove shifted to one side (the left side of FIG. 5) in the axial direction X1 while turning around the central axis of the outer peripheral face 24B. In other words, the outer periphery turning groove 49 turns in a spiral manner along the outer peripheral face 24B.

In the present embodiment, an outer periphery turning groove having two turns is illustrated as the outer periphery turning groove 49. The outer periphery turning groove 49 has a generally semicircular shape (generally U-shape with round corners) or a generally U-shape with angled corners (a generally semicircular shape in FIG. 5) in section. The outer periphery turning groove 49 has a groove depth D1 (see FIG. 5) with which an inner periphery-side half of each ball 23 (illustrated by each black circle in FIG. 5) can be accommodated, and is formed through cutting performed with the use of an end mill or the like. One end 49A (see FIG. 3) of the outer periphery turning groove 49 is connected to a portion of the peripheral wall, which defines the accommodation hole 45 on the rolling start position 47A side (the lower left side in FIG. 3), and the other end 49B of the outer periphery turning groove 49 is connected to a portion of the peripheral wall, which defines the accommodation hole 45 on the rolling end position 47B side (the upper right side in FIG. 3).

A first step portion 71 is formed in the other end portion (the right end portion in FIG. 5) of the outer peripheral face 24B of the ball nut 24. The first step portion 71 is connected to the other end face (the right end face in FIG. 5) of the ball nut 24. As illustrated in FIG. 4, the movement of the ball nut 24 toward one side (the lower left side in FIG. 3 and left side in FIG. 5) in the axial direction X1 relative to the piston 27 is prevented when one end portion (the left end portion in FIG. 4) of the ball nut 24 abuts against the bottom portion 29 (refer to FIG. 4) of the piston 27 in the state where the ball nut 24 is accommodated in the piston 27.

As illustrated in FIG. 3 and FIG. 5, the piston 27 is made of metal such as steel. The cylindrical portion 28 has an outer peripheral face 28B that is a cylindrical face coaxial with the inner and outer peripheral faces 24A, 24B of the ball nut 24. As illustrated in FIG. 4 and FIG. 6, an externally-fitting portion 39 to be fitted onto the outer periphery of the internally-fitting portion 38 of the ball nut 24 is formed in one end portion (the left end portion in FIG. 4) of the cylindrical portion 28. The inner peripheral face 28A of the cylindrical portion 28 except the externally-fitting portion 39 is a cylindrical face. The inner periphery of the externally-fitting portion 39 has a generally regular hexagonal shape. The externally-fitting portion 39 is coaxial with the outer peripheral face 28B, and has such dimensions that the externally-fitting portion 39 conforms to the internally-fitting portion 38. Six apexes of the hexagonal shape of the inner periphery of the externally-fitting portion 39 are located on an extension surface of the inner peripheral face 28A of the cylindrical portion 28 except the externally-fitting portion 39. The externally-fitting portion 39 is formed by forging. When the ball nut 24 is fitted in the piston 27, the ball nut 24 and the piston 27 are prevented from rotating relative to each other because the outer periphery of the internally-fitting portion 38 of the ball nut 24 and the inner periphery of the externally-fitting portion 39 of the piston 27 are fitted to each other.

The inner peripheral face 28A of the piston 27 has a diameter that is larger than the diameter of the outer peripheral face 24B of the ball nut 24 by a predetermined value. Thus, the cylindrical portion 28 except the externally-fitting portion 39 is fitted to the ball nut 24 so as to completely surround the entire region of the outer peripheral face 24B of the ball nut 24 except the internally-fitting portion 38. When the ball nut 24 is fitted in the piston 27, the inner peripheral face 28A of the cylindrical portion 28 except the externally-fitting portion 39 is located with a predetermined space S1 (refer to FIG. 5) left between the inner peripheral face 28A and the outer peripheral face 24B of the ball nut 24 over the entire region in the circumferential direction Y. For example, the space S1 has a size corresponding to approximately half of the diameter of each ball 23. When the ball nut 24 and the piston 27 are connected to each other, an annular space SP (refer to FIG. 4 and FIG. 5) is defined between the inner peripheral face 28A of the cylindrical portion 28 of the piston 27 and the outer peripheral face 24B of the ball nut 24.

A second step portion 72 is formed in the inner peripheral face 28A of the cylindrical portion 28 of the piston 27 (the right end portion in FIG. 5). The second step portion 72 is connected to the other end face (the right end face in FIG. 5) of the piston 27. In a region of the inner peripheral face 28A, which is located closer to the other end (the right end in FIG. 5) of the inner peripheral face 28A than the second step portion 72, there is formed a large-diameter face 73 having a diameter larger than that of the other portion of the inner peripheral face 28A. An annular grove 74 extending along the circumferential direction Y is formed in an intermediate portion of the large-diameter face 73 in the axial direction X1.

As illustrated in FIG. 3 and FIG. 5, the bushing 36 is an annular member made of resin or metal. The bushing 36 is interposed between the outer periphery of the other end portion (an upper right portion in FIG. 3, a right end portion in FIG. 5) of the ball nut 24 and the inner periphery of the other end portion (an upper right portion in FIG. 3, a right end portion in FIG. 5) of the cylindrical portion 28. More specifically, the bushing 36 is fitted so as to abut against both the first step portion 71 of the outer peripheral face 24B of the ball nut 24 and the second step portion 72 of the inner peripheral face 28A of the cylindrical portion 28, from the other side (the upper right side in FIG. 3, the right side in FIG. 5) in the axial direction X1.

Because the ball nut 24 is fitted in the piston 27, the inner diameter of the externally-fitting portion 39 of the piston 27 is set to be slightly larger than the outer diameter of the internally-fitting portion 38 of the ball nut 24. Thus, when the externally-fitting portion 39 and the internally-fitting portion 38 are fitted to each other, a clearance is formed between the outer periphery of the internally-fitting portion 38 and the inner periphery of the externally-fitting portion 39 of the cylindrical portion 28. As a result, a backlash may be created between the ball nut 24 and the piston 27. Especially, in the present embodiment, the internally-fitting portion 38 of the ball nut 24 and the externally-fitting portion 39 of the piston 27 are both formed by forging. Thus, the dimensional accuracies of the outer periphery of the internally-fitting portion 38 and the inner periphery of the externally-fitting portion 39 may be low. Thus, there is a relatively high possibility that a clearance will be formed between the outer periphery and the inner periphery of the internally-fitting portion 38 and the externally-fitting portion 39 that are fitted to each other.

In contrast to this, in the present embodiment, the bushing 36 is interposed between the outer periphery of the ball nut 24 and the inner periphery of the cylindrical portion 28. Further, the bushing 36 has an inner diameter and an outer diameter that are set to such values that no backlash is caused between the ball nut 24 and the cylindrical portion 28. Further, the outer periphery of the ball nut 24 and the inner periphery of the cylindrical portion 28 are set to such values that no backlash is caused with the use of a spigot joint structure (the backlash is prevented by a dual-structure composed of the bushing 36 and the spigot joint structure). Thus, even if a clearance is formed between the outer periphery and the inner periphery of the internally-fitting portion 38 and the externally-fitting portion 39 that are fitted to each other, formation of backlash between the ball nut 24 and the piston 27 is reliably prevented.

As illustrated in FIG. 3 and FIG. 5, the snap ring 37 is a C-ring, and is made of, for example, metal. The snap ring 37 is disposed in the annular grove 74 formed in the large-diameter face 73. The snap ring 37 compressed radially inward is placed in the annular grove 74. Then, the snap ring 37 is released from its compressed state to recover its original shape (to be elastically deformed), and is retained in the annular grove 74. Thus, the snap ring 37 is secured to the large-diameter face 73 of the cylindrical portion 28.

In the state where the snap ring 37 is secured to the cylindrical portion 28, the snap ring 37 abuts against the bushing 36 from the other side in the axial direction X1 (the upper right side in FIG. 3, the right side in FIG. 5). As stated above, the bushing 36 abuts against the first step portion 71 of the outer peripheral face 24B of the ball nut 24, from the other side in the axial direction X1 (the upper right side in FIG. 3, the right side in FIG. 5). Thus, when the snap ring 37 abuts against the bushing 36, the ball nut 24 is prevented from moving toward the other side in the axial direction X1 (the upper right side in FIG. 3, the right side in FIG. 5) relative to the piston 27. Further, as described above, when one end portion of the ball nut 24 (the left end portion in FIG. 4) abuts against the bottom portion 29 (refer to FIG. 4) of the piston 27, the ball nut 24 is prevented from moving toward the one side in the axial direction X1 (the lower left side in FIG. 3, the left side in FIG. 5) relative to the piston 27. In this way, an axial movement prevention structure according to the invention is provided. With the axial movement prevention structure, the relative movement between the ball nut 24 and the piston 27 in the axial direction X1 is prevented. Thus, it is possible to prevent relative movement between the ball nut 24 and the piston 27 in the axial direction X1 without increasing the number of components.

When the ball nut 24 and the piston 27 are fitted to each other, a turning rolling path 60 is formed by the outer periphery turning groove 49 and the inner peripheral face 28A of the cylindrical portion 28. The turning rolling path 60 is a spiral path gradually shifted toward the one side (the left side of FIG. 5) in the axial direction X1 while turning around the central axis of the ball nut 24 and the threaded shaft 22. Note that the axial direction in which the turning rolling path 60 is headed is opposite to the axial direction in which the ball rolling paths 47 are headed.

Referring again to FIG. 5, each ball 23 is a small spherical body made of metal or the like. The balls 23 are disposed in the ball rolling paths 47, and rollable in the ball rolling paths 47. Note that, for convenience of description, FIG. 5 illustrates only some of the balls 23 disposed in the ball rolling paths 47 (see black circles in FIG. 5). The deflectors 40 are small pieces. The number of the deflectors 40 is the same as the number of the accommodation holes 45 (two in the present embodiment). Each deflector 40 is fitted in a corresponding one of the accommodation holes 45. The material of the deflectors 40 may be, for example, resin or metal.

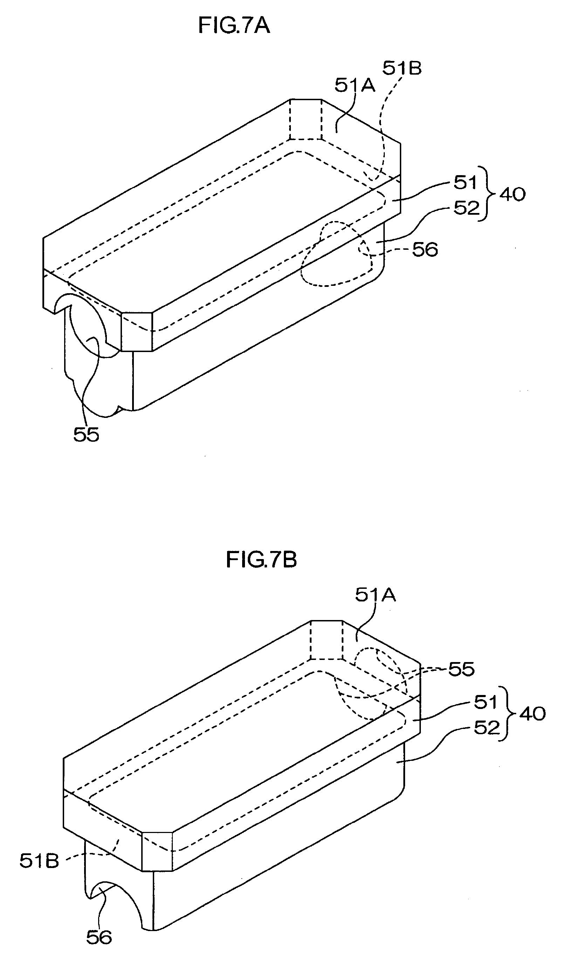

FIG. 7A is a perspective view of the deflector 40. FIG. 7B is a perspective view of the deflector 40 as viewed from the upper right side in FIG 7A. As illustrated in FIG. 7A and FIG. 7B, the deflector 40 is a single-piece member having an outer portion 51 and an inner portion 52. The outer portion 51 is a block. The outer portion 51 has such a shape as to be just fitted in the outer region 45A of the accommodation hole 45 (see FIG. 5), in the state where the cylindrical portion 28 is attached to the ball nut 24. The outer portion 51 is, for example, a rectangular parallelepiped body in which edges of four corners are chamfered. A face of the outer portion 51, which is noticeably illustrated in FIG. 7A and FIG. 7B, will be referred to as an outer face 51A. In FIG. 7A and FIG. 7B, the outer face 51A is drawn in a flat face, but the outer face 51A is curved so as to be flush with the inner peripheral face 28A of the cylindrical portion 28.

The inner portion 52 is a block elongated along the longitudinal direction of the outer portion 51. The inner portion 52 has such a shape as to be just fitted in the inner region 45B of the accommodation hole 45 (see FIG. 5). Both end portions of the inner portion 52 in the longitudinal direction are rounded. A face of the outer portion 51, which is on the opposite side of the outer portion 51 from the outer face 51A, will be referred to as an inner face 51B. The inner portion 52 is fixed to the inner face 51B. As viewed from the thickness direction of the outer portion 51, the inner portion 52 is positioned inside the contour of the outer portion 51.

Each deflector 40 has a connection passage 54. In the deflector 40, the connection passage 54 provides communication between a circular outer opening 55 and a circular inner opening 56. The connection passage 54 has a circular cross section. The outer opening 55 is opened at one longitudinal end face (the lower left end face in FIG. 7A) of the deflector 40. The inner opening 56 is opened at the other longitudinal end face (the upper right end face in FIG. 7A) of the deflector 40. The outer opening 55 and the inner opening 56 differ in radial position (distance from the central axis). The outer opening 55 is located radially outward of the inner opening 56. Therefore, the connection passage 54 is tilted radially outward from the inner opening 56 toward the outer opening 55.

As illustrated in FIG. 3 to FIG. 5, each deflector 40 is fitted (inserted) from the radially outside of the ball nut 24, into the accommodation hole 45 of the ball nut 24. In the state where the deflector 40 is fitted in the accommodation hole 45, as illustrated in FIG. 5, a part of the outer portion 51 is accommodated in the outer region 45A of the accommodation hole 45, and the inner portion 52 is accommodated in the inner region 45B of the accommodation hole 45. At this time, the peripheral edge portion of the inner face 51B of the outer portion 51 is brought into contact with the step portion 46 in the accommodation hole 45 from the radially outside of the ball nut 24, so that the deflector 40 is positioned in the accommodation hole 45. Four corners of the rectangular outer portion 51 of each deflector 40 are crimped from the outer face 51A side, so that the deflector 40 is fixed to the ball nut 24. Note that it is not necessary to crimp all the four corners of the outer portion 51, as long as at least two corners of the outer portions 51 are crimped. The deflector 40 may be positioned in the accommodation hole 45 by crimping a portion of the ball nut 24 instead of crimping the deflector 40.

In the state where the deflectors 40 are accommodated in the accommodation holes 45, a part of the outer portion 51 of each deflector 40 protrudes outward from the outer peripheral face 24B of the ball nut 24, and is accommodated in the annular space SP. Further, the outer face 51A of each outer portion 51 abuts against the inner peripheral face 28A of the cylindrical portion 2. As illustrated in FIG. 4 and FIG. 5, the deflector 40 fitted in the accommodation hole 45 on the rolling start position 47A side (the left side in FIG. 4) and the deflector 40 fitted in the accommodation hole 45 on the rolling end position 47B side (the right side in FIG. 4) are disposed so as to be oriented toward the opposite sides in the circumferential direction Y. One of the deflectors 40 is fitted in the accommodation hole 45 on the rolling start position 47A side (the left side in FIG. 4 and FIG. 5) such that the outer opening 55 (refer also to FIG. 7A) of the deflector 40 faces the one end 49A of the outer periphery turning groove 49. The other one of the deflectors 40 is fitted in the accommodation hole 45 on the rolling end position 47B side (the right side in FIG. 4) such that the outer opening 55 (refer also to FIG. 7A) of the deflector 40 faces the other end 49B of the outer periphery turning groove 49.

In the state where the deflectors 40 are attached to the ball nut 24 and the cylindrical portion 28, the connection passage 54 of the deflector 40 communicates with (joins) the outer periphery turning groove 49 (the turning rolling path 60) that is present at the same position in the axial direction X1. In this state, the connection passage 54 of the deflector 40 communicates with the ball rolling path 47 that is present at the same position in the axial direction X1. Thus, the connection passages 54 of the two deflectors 40 and the turning rolling path 60 formed by the outer periphery turning groove 49 and the inner peripheral face 28A of the cylindrical portion 28 constitute a bypass of the ball rolling paths 47 in the axial direction X1. In other words, the turning rolling path 60 and the two connection passages 54 constitute a returning path 61 through which the balls 23 are returned from the rolling end position 47B in the ball rolling path 47 to the rolling start position 47A in the ball rolling path 47.

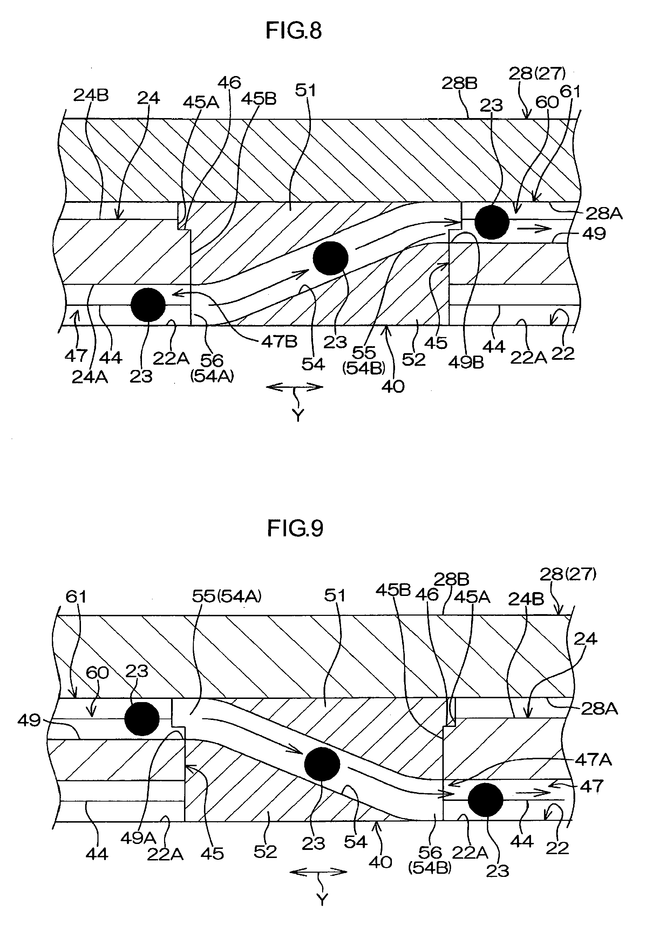

FIG. 8 is a sectional view taken along the line C-C in FIG. 4. FIG. 9 is a sectional view taken along the line D-D in FIG. 4. Note that in FIG. 7, for the sake of convenience, the circumferential direction Y is drawn as a linear direction. Therefore, the outer peripheral face 22A of the threaded shaft 22 and the inner and outer peripheral faces 24A, 24B of the ball nut 24 are drawn as straight lines in FIG. 8, but in actuality, they have a circular-arc shape.

As illustrated in FIG. 4 and FIG. 8, the deflector 40 fitted in the accommodation hole 45 on the rolling end position 47B side (the right side in FIG. 4) is used to guide the balls 23 from the ball rolling paths 47 formed on the inner periphery of the ball nut 24 to the turning rolling path 60 on the outer periphery of the ball nut 24. The inner opening 56 (refer also to FIG. 7B) of the connection passage 54 functions as an inlet 54A, and the outer opening 55 (refer also to FIG. 7A) of the connection passage 54 functions as an outlet 54B.

As illustrated in FIG. 4 and FIG. 9, the deflector 40 fitted in the accommodation hole 45 on the rolling start position 47A side (the left side in FIG. 4) is used to guide the balls 23 from the turning rolling path 60 formed on the outer periphery of the ball nut 24 to the ball rolling paths 47 formed on the inner periphery of the ball nut 24. The outer opening 55 (refer also to FIG. 7A) of the connection passage 54 functions as the inlet 54A, and the inner opening 56 (refer also to FIG. 7B) of the connection passage 54 functions as the outlet 54B. Note that the deflector 40 fitted in the accommodation hole 45 on the rolling start position 47A side (the left side in FIG. 4) has the same design as that of the deflector 40 fitted in the accommodation hole 45 on the rolling end position 47B side (the right side in FIG. 4).

As illustrated in FIG. 8, a portion of the connection passage 54 other than the outer opening 55 and the inner opening 56 has a linear shape in a section taken along the direction extending along the connection passage 54 and orthogonal to the circumferential direction Y. Portions of the connection passage 54 near the outer opening 55 and the inner opening 56 have a curved shape with a gradient lower than that of the other portion of the connection passage 54, in a section taken along the direction extending along the connection passage 54 and orthogonal to the circumferential direction Y.

As illustrated in FIG. 4, the connection passage 54 is bent in a doglegged form along the circumferential direction Y. Specifically, the connection passage 54 has a first portion 541 and a second portion 542. The first portion 541 extends substantially linearly and is tilted slightly with respect to the groove 43. The second portion 542 extends substantially linearly along the outer periphery turning groove 49. The connection passage 54 provides communication between the groove 43 and the outer periphery turning groove 49 that extend in the directions different from each other.

As illustrated in FIG. 5, the balls 23 in the ball rolling paths 47 move from the rolling start position 47A to the rolling end position 47B along the ball rolling paths 47 while rolling in the ball rolling paths 47 as the ball nut 24 rotates. As illustrated in FIG. 4 and FIG. 8, when each ball 23 reaches the rolling end position 47B, the ball 23 enters the connection passage 54 from the inner opening 56 of the connection passage 54 of the deflector 40 fitted in the accommodation hole 45 on the rolling end position 47B side (the right side in FIG. 4), passes through the connection passage 54, and is picked up into the outer periphery turning groove 49 of the outer peripheral face 24B of the ball nut 24 (see arrows illustrated in FIG. 4 and FIG. 8).

Then, the ball 23 moves through the turning rolling path 60 including the outer periphery turning groove 49 to turn around the outer periphery of the ball nut 24, thereby advancing in a direction opposite to the direction in which the ball 23 has been advancing in the axial direction X1 (thereby advancing in a direction toward the left side in FIG. 4). Then, as illustrated in FIG. 4 and FIG. 9, the ball 23, which has passed through the turning rolling path 60, enters the connection passage 54 from the outer opening 55 (the inlet 54A) of the connection passage 54 of the deflector 40 fitted in the accommodation hole 45 on the rolling start position 47A side (the left side in FIG. 4), passes through the connection passage 54, and is returned to the rolling start position 47A in the ball rolling path 47 (see arrows illustrated in FIG. 4 and FIG. 9). The balls 23 moving in the ball rolling paths 47 are circulated through the returning path 61 including the turning rolling path 60 and the connection passages 54. Thus, it is possible to stably supply the balls 23 into the ball rolling paths 47.

Next, the assembly of the ball screw device 18 will be described with reference to FIG. 3. A worker first inserts the deflectors 40 into the accommodation holes 45 from the outside in its radial direction. Then, the ball nut 24 to which the deflectors 40 have been fitted is inserted into the piston 27 along the axial direction X1 from the other side (the upper right side in FIG. 3) of the piston 27 in the axial direction X1. Then, the bushing 36 is interposed between the outer periphery of the ball nut 24 and the inner periphery of the cylindrical portion 28. Subsequently, the snap ring 37 is placed in the annular grove 74 (refer to FIG. 5), and is brought into contact with the bushing 36 from the other side in the axial direction X1 (the upper right side in FIG. 3, the right side in FIG. 5).

According to the present embodiment described above, each ball 23 moves in the ball rolling paths 47 from the rolling start position 47A to the rolling end position 47B. Then, the ball 23 that has reached the rolling end position 47B passes through the connection passage 54 of one of the deflectors 40, and is picked up into the outer periphery turning groove 49 of the outer peripheral face 24B of the ball nut 24. The ball 23 picked up into the outer periphery turning groove 49 passes through the turning rolling path 60 formed by the outer periphery turning groove 49 to turn around the outer periphery of the ball nut 24. Then, the ball 23 passes through the connection passage 54 of the other deflector 40, and is then returned to the rolling start position 47A in the ball rolling path 47. That is, the ball 23 is returned from the rolling end position 47B to the rolling start position 47A through the returning path 61 including the turning rolling path 60. Thus, it is possible to smoothly circulate the balls 23 through the ball rolling paths 47.

Because the rolling start position 47A and the rolling end position 47B are connected to each other through the returning path 61, it is not necessary to form a through-hole extending in the axial direction X1, in the peripheral wall of the ball nut 24. As a result, there is no limitation on the positions in the circumferential direction Y, where the deflectors 40 are arranged. Consequently, it is possible to increase the flexibility of the layout of the positions where the deflectors 40 are arranged. As a result, the theoretically effective number of the turns of the ball screw device 18 can be employed as it is. Consequently, it is possible to reduce the size of the ball screw device 18 in the axial direction X1.

The internally-fitting portion 38 is formed at the one end portion (the upper left side in FIG. 3, the left side in FIG. 5) of the ball nut 24 in the axial direction X1. The outer periphery of the internally-fitting portion 38 and the inner periphery of the externally-fitting portion 39 are fitted to each other, and thus relative rotation between the ball nut 24 and the piston 27 is prevented. Thus, it is possible to prevent relative rotation between the ball nut 24 and the piston 27 without increasing the number of components.

The example embodiment of the invention has been described above. However, the invention may be implemented in various other embodiments. For example, in the foregoing description, the internally-fitting portion 38 of the ball nut 24 has a regular hexagonal columnar outside shape. However, the outer periphery of the internally-fitting portion of the ball nut may have a polygonal columnar outside shape with n corners (n is an integer). In this case, n is preferably equal to or larger than six.

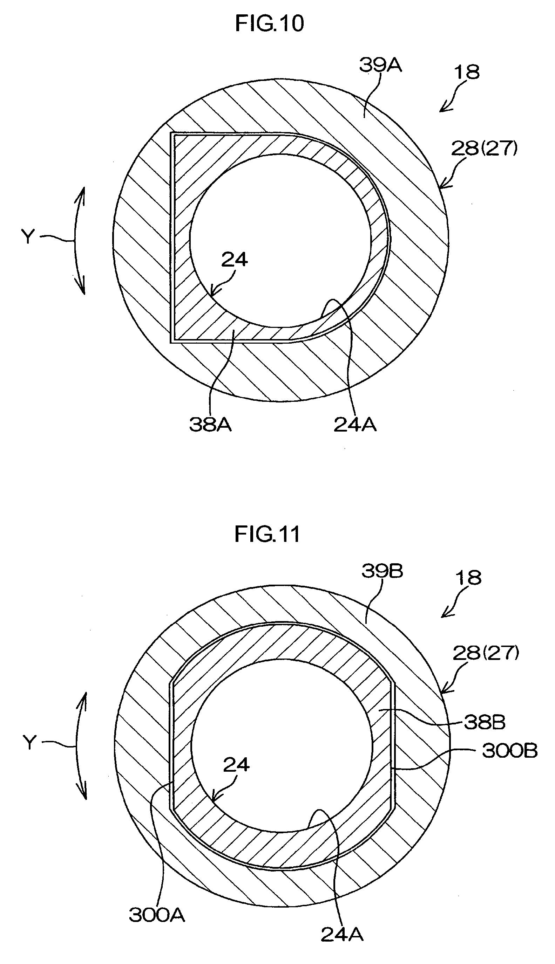

Further, the internally-fitting portion 38 of the ball nut 24 is not limited to the one having a polygonal columnar outside shape. For example, as in a first modified example illustrated in FIG. 10, an internally-fitting portion 38A of the ball nut 24 may have a D-shaped section (such a shape that the distance between the outer periphery of the internally-fitting portion 38A and the central axis of the inner peripheral face 24A of the ball nut 24 (refer to FIG. 3) is not uniform in the circumferential direction Y), and an externally-fitting portion 39A of the cylindrical portion 28 of the piston 27 may have a shape that conforms to the shape of the internally-fitting portion 38A.

As in a second modified embodiment illustrated in FIG. 11, an internally-fitting portion 38B of the ball nut 24 may have a so-called width-across-flats shape (such a shape that the distance between the outer periphery of the internally-fitting portion 38B and the central axis of the inner peripheral face 24A of the ball nut 24 (refer to FIG. 3) is not uniform in the circumferential direction Y), and an externally-fitting portion 39B of the cylindrical portion 28 of the piston 27 may have a shape that is matched with the shape of the internally-fitting portion 38B. In this case, the internally-fitting portion 38B has two flat faces 300A, 300B that are parallel to each other and face in the opposite directions.

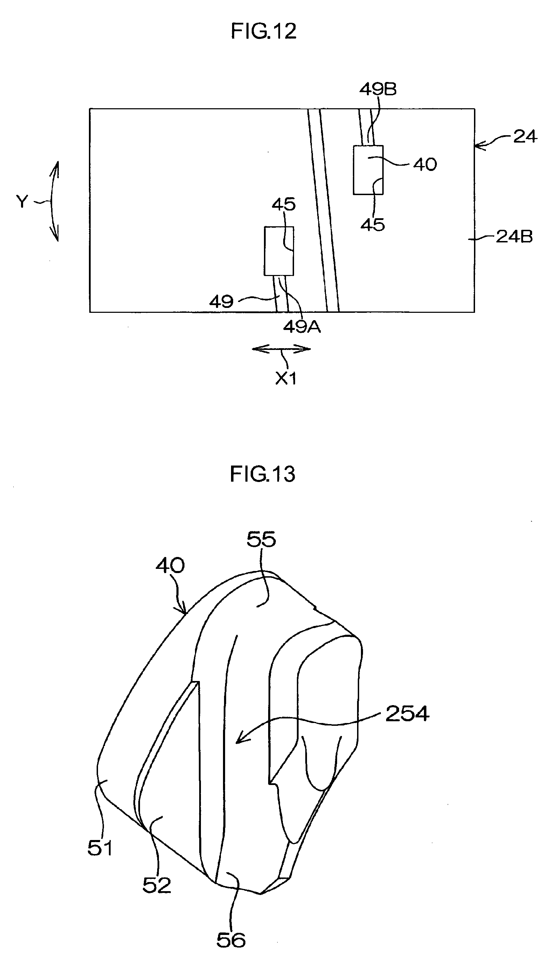

For example, the configuration of the connection passage 54 of each deflector 40 may be changed. FIG. 12 is a view for describing the arrangement of the accommodation holes 45 and the deflectors 40 according to a third modified example of the embodiment of the invention. The paired accommodation holes 45 are located at different positions in the circumferential direction Y. In this case, the theoretically required effective number of turns is, for example, 2.3, and the theoretically effective number of the turns (2.3) is employed as it is in a ball screw device 18. Consequently, it is possible to increase the flexibility of the layout of the positions where the deflectors 40 are arranged. As a result, it is possible to further reduce the size of the ball screw device 18 in the axial direction X.

FIG. 13 is a main portion sectional view illustrating the configuration of a deflector 40 according to a fourth modified example of the embodiment of the invention. In the fourth modified example, as illustrated in FIG. 13, a connection passage 254 to be used in place of the connection passage 54 may be a groove. The connection passage 254 is formed so as to break through a side wall of the deflector 40 along the longitudinal direction of the deflector 40. In the above-described embodiment, the space between the outer peripheral face 24B of the ball nut 24 and the inner peripheral face 28A of the cylindrical portion 28 is the space S1 (refer to FIG. 5) having a predetermined size. Alternatively, the outer peripheral face 24B and the inner peripheral face 28A may be opposed to each other across a small space. In this case, the groove depth of the outer periphery turning groove 49 formed in the outer peripheral face 24B of the ball nut 24 is set to such a value that the entirety of each ball 23 is accommodated.

In the above-described embodiment, the step portion 46 is formed at a portion that defines each accommodation hole 45 in the ball nut 24 to prevent the drop of the deflector 40 toward the ball nut 24. Alternatively, each accommodation hole 45 may be formed only of the inner region 45B without forming the step portion 46. In this case, the step portion 51B of the deflector 40 may be engaged with the outer peripheral face 24B of the ball nut 24 to prevent the drop of the deflector 40.

In the above-described embodiment, the outer periphery turning groove 49 is turned twice around the outer periphery of the ball nut 24. Alternatively, the number of turns may be one, or three or more. The outer periphery turning groove 49 may be formed such that the number of turns in the circumferential direction is smaller than one (e.g., 0.3 or 0.5 turns). In the above-described embodiment, the outer periphery turning groove 49 is formed in the outer peripheral face 24B of the ball nut 24. However, a turning groove having a configuration similar to that of the outer periphery turning groove 49 may be formed in the inner peripheral face of the cylindrical portion 28. In this case, the turning rolling path 60 is defined by this turning groove and the outer peripheral face 24B of the ball nut 24.

In the above-described embodiment, the piston 27 having a bottomed cylindrical shape is adopted as a cylinder. However, it goes without saying that the cylinder need not have the bottom. In the above-described embodiment, the ball screw device 18 incorporated in the electric brake system 1. However, the ball screw device 18 may be applied to another system. For example, the ball screw device 18 may be applied to an electric actuator having a drive shaft extending in the axial direction.

Further, various design changes may be made in the scope of the appended claims.

## Claims

1. A ball screw device comprising:
a threaded shaft (22) having an outer peripheral face (22A) in which a groove (41) is formed;
a ball nut (24) fitted onto the threaded shaft (22) and having an inner peripheral face (24A) in which a groove (43) is formed;
a plurality of balls (23) rollably disposed in a spiral ball rolling path (47) formed by the groove (43) of the ball nut (24) and the groove (41) of the threaded shaft (22); and
a cylinder (28) disposed so as to surround an outer periphery of the ball nut (24), wherein
in the groove (43) of the ball nut (24), accommodation recesses (45) that pass through a peripheral wall of the ball nut (24) in a thickness direction of the ball nut (24) are formed in two accommodation recess formed positions (47A, 47B) that are apart from each other in an axial direction of the threaded shaft (22),
in at least one of an outer peripheral face (24B) of the ball nut (24) and an inner peripheral face (28A) of the cylinder (28), a turning groove (49) that turns in a spiral manner along a corresponding one of the outer peripheral face (24B) of the ball nut (24) and the inner peripheral face (28A) of the cylinder (28) is formed, and the turning groove (49) and the outer peripheral face (24B) of the ball nut (24) or the inner peripheral face (28A) of the cylinder (28) constitute a turning rolling path (60) in which the balls (23) are rollable,
the ball screw device further comprises deflectors (40) accommodated in the respective accommodation recesses (45), and each having a connection passage (54) that connects the ball rolling path (47) and the turning rolling path (60) to each other;
the two connection passages (54) and the turning rolling path (60) constitute a returning path (61) through which the balls (23) are returned from one of the two accommodation recess formed positions (47A, 47B) to the other one of the two accommodation recess formed positions (47A, 47B),
the ball nut (24) has an internally-fitting portion (38) having an outer peripheral face formed such that a distance between the outer peripheral face and a central axis of the ball nut (24) is non-uniform along a circumferential direction of the ball nut (24), the internally-fitting portion (38) being a part of the ball nut (24) in an axial direction of the ball nut (24),
**characterized in that** relative rotation between the ball nut (24) and the cylinder (28) is prevented by fitting an outer periphery of the internally-fitting portion (38) and an inner periphery (39) of the cylinder (28) to each other and
the ball screw device further comprises an axial movement prevention structure (36, 37) that prevents an axial movement of the cylinder (28) relative to the ball nut (24).

2. The ball screw device according to claim 1, wherein the outer periphery of the internally-fitting portion (38) has a polygonal sectional shape.

3. The ball screw device according to claim 1 or 2, wherein the internally-fitting portion (38) is located at an end portion of the ball nut (24) in the axial direction of the ball nut (24).

4. The ball screw device according to anyone of claims 1 to 3, further comprising a bushing (36) interposed between the outer periphery of the ball nut(24) and the inner periphery of the cylinder (28).

5. The ball screw device according to claim 4, wherein:
the bushing (36) is fitted to the ball nut (24) so as to abut against the ball nut (24) from one side in the axial direction of the ball nut (24); and
the axial movement prevention structure (36, 37) includes a snap ring (37) that is secured to the cylinder (28) and that abuts against the bushing (36) from the one side in the axial direction.

## Patentansprüche

1. Kugelgewindevorrichtung mit:
einer Gewindewelle (22) mit einer äußeren Umfangsfläche (22A), in der eine Nut (41) ausgebildet ist;
einer Kugelmutter (24), die auf die Gewindewelle (22) angebracht ist und eine innere Umfangsfläche (24A) aufweist, in der eine Nut (43) ausgebildet ist;
einer Vielzahl von Kugeln (23), die rollbar in einem Spiralkugelrollpfad (47) vorgesehen sind, der von der Nut (43) der Kugelmutter (24) und der Nut (41) der Gewindewelle (22) ausgebildet ist; und mit
einem Zylinder (28), der derart angeordnet ist, dass er einen äußeren Umfang der Kugelmutter (24) umgibt, wobei in der Nut (43) der Kugelmutter (24) Aufnahmeaussparungen (45), die durch eine Umfangswand der Kugelmutter (24) in einer Dickenrichtung der Kugelmutter (24) hindurchführen, an zwei aufnahmeaussparungsförmigen Positionen (47A, 47B) ausgebildet sind, die in einer Axialrichtung der Gewindewelle (22) voneinander beabstandet sind,
einer, in mindestens einer einer äußeren Umfangsfläche (24B) der Kugelmutter (24) und einer inneren Umfangsfläche (28A) der Zylinders (28), ausgebildeten Umlaufnut (49), die spiralförmig entlang einer Entsprechenden der äußeren Umfangsfläche (24B) der Kugelmutter (24) und der inneren Umfangsfläche (28A) des Zylinders (28) umläuft, und die Umlaufnut (49) und die äußere Umfangsfläche (24B) der Kugelmutter (24) oder die innere Umfangsfläche (28A) des Zylinders (28) einen Umlaufrollpfad (60) bilden, in dem die Kugeln rollbar sind,
wobei die Kugelgewindevorrichtung weiter Ableiter (40) aufweist, die in den entsprechenden Aufnahmeaussparungen (45) aufgenommen sind, und jeweils eine Verbindungspassage (54) aufweisen, die den Kugelrollpfad (47) und den Umlaufrollpfad (60) miteinander verbinden;
wobei die zwei Verbindungspassagen (54) und der Umlaufrollpfad (60) einen Rückführungspfad (61) bilden, durch den die Kugeln (23) von einer der beiden aufnahmeaussparungsförmigen Positionen (47A, 47B) zu der anderen der beiden aufnahmeaussparungsförmigen Positionen (47A, 47B) zurückgeführt sind,
wobei die Kugelmutter einen Innenformabschnitt (38) mit einer äußeren Umfangsfläche aufweist, die derart ausgebildet ist, dass ein Abstand zwischen der äußeren Umfangsfläche und einer Zentralachse der Kugelmutter (24) entlang einer Umfangsrichtung der Kugelmutter (24) ungleichförmig ausgebildet ist, wobei der Innenformabschnitt (38) in einer Axialrichtung der Kugelmutter (24) ein Teil der Kugelmutter (24) ist,
**dadurch gekennzeichnet, dass** eine Relativdrehung zwischen der Kugelmutter (24) und dem Zylinder (28) mittels Anpassen eines äußeren Umfangs des Innenformabschnitts (38) und eines inneren Umfangs (39) des Zylinders (28) aneinander verhindert ist und
wobei die Kugelgewindevorrichtung weiter eine Axialbewegungsverhinderungsstruktur (36, 37) aufweist, die eine axiale Bewegung des Zylinders (28) relativ zu der Kugelmutter (24) verhindert.

2. Kugelgewindevorrichtung nach Anspruch 1, wobei der äußere Umfang des Innenformabschnitts (38) eine vieleckige Schnittfläche aufweist.

3. Kugelgewindevorrichtung nach Anspruch 1 oder 2, wobei der Innenformabschnitt (38) an einem Endabschnitt der Kugelmutter (24) in der Axialrichtung der Kugelmutter (24) angeordnet ist.

4. Kugelgewindevorrichtung nach einem der Ansprüche 1 bis 3, die weiter eine Buchse (36) aufweist, die zwischen dem äußeren Umfang der Kugelmutter (24) und dem inneren Umfang des Zylinders (28) eingefügt ist.

5. Kugelgewindevorrichtung nach Anspruch 4, wobei die Buchse (36) derart an die Kugelmutter (24) angepasst ist, dass sie von einer Seite in der Axialrichtung der Kugelmutter (24) an die Kugelmutter (24) angrenzt; und wobei
die Axialbewegungsverhinderungsstruktur (36, 37) einen Schnappring (37) enthält, der an dem Zylinder (28) gesichert ist und der von der einen Seite in der Axialrichtung an der Buchse (36) angrenzt.

## Revendications

1. Dispositif de vis sphérique comprenant :
une tige filetée (22) ayant une face périphérique externe (22A) dans laquelle est formée une rainure (41);
un écrou sphérique (24) monté sur la tige filetée (22) et ayant une face périphérique interne (24A) dans laquelle est formée une rainure (43);
une pluralité de billes (23) disposées de manière roulante dans une trajectoire de roulement de bille en spirale (47) formée par la rainure (43) de l'écrou sphérique (24) et la rainure (41) de la tige filetée (22) ; et
un cylindre (28) disposé afin d'entourer une périphérie externe de l'écrou sphérique (24), dans lequel :
dans la rainure (43) de l'écrou sphérique (24), des évidements de logement (45) qui passent à travers une paroi périphérique de l'écrou sphérique (24) dans une direction d'épaisseur de l'écrou sphérique (24) sont formés dans deux positions formées d'évidement de logement (47A, 47B) qui sont espacées l'une de l'autre dans une direction axiale de la tige filetée (22),
dans au moins l'une parmi une face périphérique externe (24B) de l'écrou sphérique (24) et une face périphérique interne (28A) du cylindre (28), une rainure rotative (49) qui tourne à la manière d'une spirale le long d'une face correspondante parmi la face périphérique externe (24B) de l'écrou sphérique (24) et la face périphérique interne (28A) du cylindre (28) est formée, la rainure rotative (49) et la face périphérique externe (24B) de l'écrou sphérique (24) ou la face périphérique interne (28A) du cylindre (28) constituent une trajectoire de roulement rotative (60) dans laquelle les billes (23) peuvent rouler,
le dispositif de vis sphérique comprend en outre des déflecteurs (40) logés dans des évidements de logement (45) respectifs, et ayant chacun un passage de raccordement (54) qui raccorde la trajectoire de roulement de bille (47) et la trajectoire de roulement rotative (60) entre elles ;
les deux passages de raccordement (54) et la trajectoire de roulement rotative (60) constituent une trajectoire de retour (61) par le biais de laquelle les billes (23) reviennent de l'une des deux positions formées d'évidement de logement (47A, 47B) à l'autre des deux positions formées d'évidement de logement (47A, 47B),
l'écrou sphérique (24) a une partie d'ajustement interne (38) ayant une face périphérique externe formée de sorte qu'une distance entre la face périphérique externe et un axe central de l'écrou sphérique (24) n'est pas uniforme le long d'une direction circonférentielle de l'écrou sphérique (24), la partie d'ajustement interne (38) faisant partie de l'écrou sphérique (24) dans une direction axiale de l'écrou sphérique (24),
**caractérisé en ce que** la rotation relative entre l'écrou sphérique (24) et le cylindre (28) est empêchée en ajustant une périphérie externe de la partie d'ajustement interne (38) et une périphérie interne (39) du cylindre (28) entre elles, et
le dispositif de vis sphérique comprend en outre une structure de prévention de mouvement axial (36, 37) qui empêche un mouvement axial du cylindre (28) par rapport à l'écrou sphérique (24).

2. Dispositif de vis sphérique selon la revendication 1, dans lequel la périphérie externe de la partie d'ajustement interne (38) a une forme transversale polygonale.

3. Dispositif de vis sphérique selon la revendication 1 ou 2, dans lequel la partie d'ajustement interne (38) est positionnée au niveau d'une partie d'extrémité de l'écrou sphérique (24) dans la direction axiale de l'écrou sphérique (24).

4. Dispositif de vis sphérique selon l'une quelconque des revendications 1 à 3, comprenant en outre une douille (36) intercalée entre la périphérie externe de l'écrou sphérique (24) et la périphérie interne du cylindre (28).

5. Dispositif de vis sphérique selon la revendication 4, dans lequel :
la douille (36) est montée sur l'écrou sphérique (24) afin de venir en butée contre l'écrou sphérique (24) à partir d'un côté dans la direction axiale de l'écrou sphérique (24) ; et
la structure de prévention de mouvement axial (36, 37) comprend un anneau de retenue (37) qui est fixé sur le cylindre (28) et qui vient en butée contre la douille (36) à partir d'un côté dans la direction axiale.
